# EUROPÄISCHE PATENTANMELDUNG

(11) **EP 0 710 610 A1**
(43) Veröffentlichungstag der Anmeldung: **08.05.1996**
(21) Anmeldenummer: 95116522.4
(22) Anmeldetag: 20.10.1995
(51) Int. Cl.: B65D 90/50, B65D 25/14, B29C 41/06

(54) **Tank mit mehrschichtigem Wandaufbau und Verfahren zu dessen Herstellung**

(30) Priorität: 02.11.1994 DE 4439040
(71) Anmelder: BAYER AG, D-51368 Leverkusen (DE)
(72) Erfinder: Grigat, Ernst, Dr., D-51381 Leverkusen (DE); Driessen, Hans-Gerd, D-47809 Krefeld (DE); Post, Udo, D-54169 Bergisch Gladbach (DE)

(57) **Zusammenfassung**

Die Erfindung betrifft Tanks mit mehrschichtigem Wandaufbau und ein Verfahren zu deren Herstellung. Der Wandaufbau von außen nach innen besteht aus Schichten aus massiven, nicht geschäumten Polymeren, offenzellig geschäumtem Polyurethan, massivem Polyurethan, gegebenenfalls massivem Polyamid. Das Verfahren besteht darin, daß eine Form um zwei Achsen gleichzeitig rotiert wird und die reaktiven Schmelzen zur Herstellung der Schichten so eingefüllt werden, daß die folgende Schicht jeweils nach dem Ausreagieren der vorhergehenden Schicht aufgebracht wird.

## Beschreibung

Die Erfindung betrifft Tanks mit mehrschichtigem Wandaufbau und ein Verfahren zu deren Herstellung.

Kunststofftanks zur Lagerung von Flüssigkeiten, insbesondere Brenn- und Treibstoffen sind bekannt. Polyamid oder Polyethylen sind die dabei gebräuchlichsten Materialien. Für verschiedene Zwecke, beispielsweise die Lagerung von Heizöl, ist eine zusätzliche Leckagesicherung zur Vermeidung von Umweltschäden erforderlich. Diese Sicherung wird üblicherweise in Form einer Auffangwanne oder einer doppelten Tankwand ausgeführt. Eine doppelte Tankwand ist gegenüber einer Auffangwanne vorteilhaft, wenn der Tank unterirdisch angeordnet oder beispielsweise in der Altbausanierung in einen Keller gestellt wird, der dann nicht in eine Wanne umgebaut werden muß.

Da doppelwandige Tanks oft mit einem Leckagedetektor ausgestattet werden, um eine Leckage der inneren Tankwand anzuzeigen, während die äußere Tankwand den Inhalt zurückhält, ist es notwendig, daß die Schicht zwischen den beiden Tankwänden von dem betreffenden Inhaltsstoff, beispielsweise Heizöl, durchflossen werden kann.

Zur Herstellung doppelwandiger Tanks werden, wenn überhaupt Kunststoffe verwendet werden, entweder nur in einer Schicht Kunststoffe eingesetzt (z.B. WO 8 102 562 oder CH-A 440 134), wobei die andere Schicht meist aus Beton oder Metall besteht, oder die Schichten in mehreren, in der Fertigungsweise unterschiedlichen, Arbeitsgängen erstellt (z.B. US-A 4 739 895, EP-A 470 321, 520 978). Unter unterschiedlichen Arbeitsgängen ist beispielsweise das thermoplastische Formen einer Tankwand und das Bestreichen oder Spritzen mit Epoxyharzen nach dem Einlegen von Folien oder Matten zu verstehen.

Als Abstandhalter dienen beispielsweise Drahtgitter (CH-A 440 134), Noppenfolien (EP-A 470 321), Packpapier (CH-A 618 658), Vliese (DE-A 658 971), harzgetränkte Glasfasermatten (EP-A 520 978).

Ein wesentlicher Punkt in der Sicherheit ist auch die mechanische Stabilität von Tanks. Vorteilhaft sind also Systeme, die eine deutliche Festigkeitserhöhung der Tankwände bewirken.

Die Aufgabe bestand darin, einen doppelwandigen Sicherheitstank mit der Möglichkeit zur Leckageanzeige der inneren Tankwand zu konstruieren, der in einem einfachen, einheitlichen Prozeß herstellbar ist, und zusätzlich eine gegenüber einwandigen Tanks erheblich verbesserte mechanische Festigkeit aufweist.

Die Lösung dieser Aufgabe ist die Entwicklung eines Tanks mit mehrschichtigem Wandaufbau, dadurch gekennzeichnet, daß der Wandaufbau von außen nach innen besteht aus Schichten aus
- massivem, nicht geschäumten Polymeren,
- offenzellig geschäumtem Polyurethan,
- massivem Polyurethan,
- gegebenenfalls massivem Polyamid.

Dieser Aufbau gewährleistet nicht nur die notwendige Doppelwandigkeit mit der Möglichkeit zur Leckagedetektion, sondern ist darüberhinaus sehr einfach herzustellen. Durch die feste Haftung der Schaumschicht an der inneren und äußeren Wand gewinnt man eine erhebliche Festigkeit der Gesamtkonstruktion gegenüber mechanischen Einflüssen. Durch die Wahl fester, aber dennoch elastischer, Materialien ist eine hohe Widerstandsfähigkeit insbesondere gegen Schlag- oder Druckeinwirkung gewährleistet.

Gegenstand der Erfindung ist ein Tank mit mehrschichtigem Wandaufbau, dadurch gekennzeichnet, daß der Wandaufbau von außen nach innen besteht aus Schichten aus
- massivem, nicht geschäumten Polymeren,
- offenzellig geschäumtem Polyurethan,
- massivem Polyurethan,
- gegebenenfalls massivem Polyamid.

Der erfindungsgemäße mehrschichtige Tankaufbau ist für Tanks mit einem Fassungsvermögen zwischen 1 l und 5.000 l vorgesehen. Prinzipiell sind auch größere oder kleinere Tanks nach dieser Methode machbar.

Die äußere Schicht aus massivem, nicht geschäumten Polymeren des erfindungsgemäßen Tanks kann bestehen aus Polyolefinen, Polyurethan oder bevorzugt Polyamid.

Als äußere massive Schicht kann auch ein mehrschichtiger Aufbau aus den genannten Polymeren hergestellt werden. Beispielsweise kann ein Polyethylentank zunächst mit massivem Polyurethan ausgekleidet werden, bevor die Schaumschicht aufgetragen wird.

Polyolefine können Polypropylen oder Polyethylen sein oder Copolymerisate mit Hauptbestandteil Ethylen oder Propylen in der Monomerzusammensetzung, bevorzugt ist Polyethylen. Unter den Polyethylenen ist "Low-Density-Polyethylen" (LDPE) bevorzugt.

Polyamid im erfindungsgemäßen Sinn ist Polyamid 66 (Polyhexamethylenadipamid) oder Polyamid 6 (Polycaprolactam) oder Copolyamide mit Hauptbestandteilen 6 oder 66. Bevorzugt ist durch aktivierte anionische Polymerisation hergestelltes Polyamid 6 oder durch aktivierte anionische Polymerisation hergestelltes Copolyamid mit Hauptbestandteil Polycaprolactam.

Die aktivierte anionische Polymerisation von Lactamen zu Polyamiden wird in technischem Maßstab so durchgeführt, daß man einerseits eine Lösung von Katalysator in Lactam und andererseits eine Lösung von Aktivator in Lactam herstellt, wobei üblicherweise beide Lösungen so zusammengesetzt sind, daß ein Zusammengeben im gleichen Verhältnis die gewünschte Gesamtrezeptur ergibt. Das ist jedoch nicht notwendig. Man kann ebenso andere Zusammensetzungen wählen, beispielsweise eine konzentrierte Aktivator- sowie Katalysatorschmelze zu einer Lactamschmelze dosieren. Weitere Additive können je nach Verträglichkeiten in die Aktivator-, Katalysator- oder gegebenenfalls Lactamschmelze gegeben werden.

Die Polymerisation erfolgt durch Vermischen der Einzellösungen zur Gesamtrezeptur bei 80 bis 200°C, bevorzugt 100 bis 140°C.

Als Lactame kommen cyclische Lactame mit 6 bis 12 C-Atomen in Frage, bevorzugt Laurinlactam und besonders bevorzugt ε-Caprolactam.

Der Katalysator im erfindungsgemäßen Sinne ist ein Alkali- oder Erdalkalilactamat, bevorzugt als Lösung in Lactam, besonders bevorzugt Natriumcaprolactamat in ε-Caprolactam.

Der Aktivator im erfindungsgemäßen Sinne können N-Acyllactame oder Säurechloride oder, bevorzugt aliphatische Isocyanate, besonders bevorzugt Oligomere des Hexamethylendiisocyanats sein. Als Aktivator kann sowohl die Reinsubstanz wie auch bevorzugt eine Lösung, beispielsweise in N-Methylpyrrolidon, dienen.

Weitere Additive können beispielsweise Schlagzähmodifikatoren, Flammschutzmittel, Nukleierungshilfsmittel, Farbstoffe, Füllöle, Stabilisatoren, Oberflächenverbesserer, Füll- oder Verstärkungsstoffe und Entformungshilfsmittel sein.

Die Schaumschicht zwischen der inneren und der äußeren massiven Wand besteht erfindungsgemäß aus einem Harnstoffgruppen enthaltenden Polyurethanschaum. Dieser wird in der Form durch Zusammengeben einer Polyolmischung und einer Isocyanatmischung hergestellt.

Die Polyolmischung besteht aus
- 86 bis 95 Gew.-%: di- oder höherfunktionell OH-terminierten Polyestern bzw. Polyestergemischen oder bevorzugt di- oder höherfunktionell OH-terminierten Polyethern bzw. Polyethergemischen, oder Gemischen daraus,
- 3 bis 9 Gew.-%: Katalysatoren, Kettenverlängerern und Additiven wie beispielsweise Schmiermitteln, und
- 2 bis 5 Gew.-%: Treibmittel, bevorzugt Wasser mit bevorzugt einer Gesamt-OH-Zahl der Mischung von 350 bis 600, besonders bevorzugt 430 bis 490 (OH-Zahlen bestimmt nach DIN 53240).

Die Isocyanatmischung besteht aus aromatischen di- oder höherfunktionellen Isocyanaten oder deren Prepolymeren. Bevorzugt sind 4,4'-Diisocyanatodiphenylmethan, Prepolymere des 4,4'-Diisocyanatodiphenylmethans, phosgenierte Anilin-Formaldehyd-Kondensate, sowie Gemische daraus.

Bevorzugt sind Isocyanatmischungen mit einem NCO-Gehalt von 20 bis 38 Gew.-%, besonders bevorzugt von 25 bis 34 Gew.-%.

Die massive Polyurethanschicht besteht erfindungsgemäß aus einem Harnstoffgruppen enthaltenden Polyurethanwerkstoff. Dieser wird in der Form durch Zusammengeben einer Polyolmischung und einer Isocyanatmischung hergestellt.

Die Polyolmischung besteht aus
- 50 bis 95 Gew.-%: di- oder höherfunktionell OH-terminierte Polyestern bzw. Polyestergemischen oder bevorzugt di- oder höherfunktionell OH-terminierten Polyethern bzw. Polyethergemischen, oder Gemischen daraus,
- 5 bis 50 Gew.-%: Katalysatoren, Kettenverlängerern und Additiven wie beispielsweise Schmiermitteln, und
- 2 bis 5 Gew.-%: Treibmittel, bevorzugt Wasser mit bevorzugt einer Gesamt-OH-Zahl der Mischung von 100 bis 500, besonders bevorzugt 220 bis 370 (OH-Zahlen bestimmt nach DIN 53240).

Die Isocyanatmischung besteht aus aromatischen di- oder höherfunktionellen Isocyanaten oder deren Prepolymeren. Bevorzugt sind 4,4'-Diisocyanatodiphenylmethan, Prepolymere des 4,4'-Diisocyanatodiphenylmethans, phosgenierte Anilin-Formaldehyd-Kondensate, sowie Gemische daraus.

Bevorzugt sind Isocyanatmischungen mit einem NCO-Gehalt von 20 bis 38 Gew.-%, besonders bevorzugt von 25 bis 34 Gew.-%. Die Isocyanatmischung für das massive Polyurethansystem kann mit derjenigen für den Schaum identisch sein.

Das erfindungsgemäße Verfahren zur Herstellung des erfindungsgemäßen Tanks ist dadurch gekennzeichnet, daß eine Hohlform, beispielsweise eine Form wie sie üblicherweise zur Herstellung einwandiger Gußpolyamid-Tanks verwendet wird, gleichzeitig um zwei Achsen rotiert wird und Schicht für Schicht mit den reaktiven Mischungen zur Herstellung der einzelnen Schichten, nacheinander von außen nach innen, so befüllt wird, daß die folgende Schicht jeweils nach dem Ausreagieren der vorhergehenden Schicht aufgebracht wird. Die Formtemperatur muß im Falle eines Gußpolyamideinsatzes 160 bis 220°C betragen. Die Polyurethansysteme sind so gewählt, daß direkt nach dem Ausreagieren der Gußpolyamidschicht das Polyurethan auf das noch heiße Gußpolyamid aufgetragen werden kann. Wenn keine innere Gußpolyamidschicht mehr gewünscht wird, kann der Tank während der zweiten Beschichtung stetig abkühlen. Vor dem Aufbringen einer inneren Gußpolyamidschicht muß jedoch die zur Polyamidpolymerisation erforderliche Temperatur von 160 bis 200°C erreicht sein.

Eine Verfahrensvariante besteht darin, statt der Hohlform einen fertigen Tank, beispielsweise aus Polyamid oder Polyethylen, wie bereits beschrieben um zwei Achsen zu rotieren und in der gleichen Weise mit inneren Schichten auszukleiden. Die Auskleidung kann bei Temperaturen von 0 bis 200°C, vorzugsweise bei 16 bis 120°C, geschehen.

Die erfindungsgemäßen Tanks können zur Lagerung und/oder dem Transport von Flüssigkeiten verwendet werden, insbesondere von brennbaren und/oder giftigen und/oder agressiven Flüssigkeiten.

Die erfindungsgemäßen Tanks können durch die für Kunststoffe üblichen Methoden mechanisch nachbearbeitet werden.

Die erfindungsgemäßen Tanks können mit einer Leckageanzeige zwischen der inneren und der äußeren Tankwand ausgerüstet sein.

### Beispiele

Eine rechteckige Rotationsgußform mit 15 l Inhalt wird unter Rotation um zwei Achsen gleichmäßig auf 200°C aufgeheizt.

Dann wird kurz angehalten, 600 g einer Polyamid-Polymerisationsmischung eingefüllt, und sofort um zwei Achsen gleichzeitig weiterrotiert. Die Polyamid-Polymerisationsmischung bestand aus
- 97,8 Gew.-%: Caprolactam,
- 1,7 Gew.-%: Katalysator (18 Gew.-%ige Lösung von Natriumlactamat in ε-Caprolactam) und
- 0,5 Gew.-%: Aktivator (Oligomeres des Hexamethylendiisocyanat als 70 Gew.-%ige Lösung in N-Methylpyrrolidon).

Nach 5 Minuten ist die Polymerisation beendet. Nun wird wieder angehalten und die Polyurethan-Schaummischung (900 g) eingefüllt. Man rotiert sofort nach dem Einfüllen wieder um zwei Achsen gleichzeitig.

Die Polyurethan-Schaummischung bestand aus 10 Gew.-Teilen einer Polyolmischung und 100 Gew.-Teilen einer Isocyanatmischung.

Die Polyurethanmischung mit einer OH-Zahl von 470 (alle OH-Zahlen wurden nach DIN 53240 gemessen) bestand aus
- 38,5 Gew.-%: eines Polyethers der OH-Zahl 470, der durch Addition einer Mischung aus Zucker, Propylenglykol und Wasser mit Propylenoxid entstanden ist,
- 16,0 Gew.-%: eines Polyethers der OH-Zahl 515, der durch Addition von Propylenglykol und Propylenoxid entstanden ist,
- 37,0 Gew.-%: eines Polyethers mit der OH-Zahl 550, der durch Addition von Trimethylolpropan an Propylenoxid entstanden ist,
- 1,4 Gew.-%: eines Polyethersiloxans,
- 2,7 Gew.-%: einer Mischung aus 25 Gew.-% Kaliumacetat und 75 Gew.-% Diethylenglykol,
- 0,3 Gew.-%: von Bis-(2-Dimethylaminoethyl)methylamin,
- 0,2 Gew.-%: Dimethylcyclohexylamin,
- 0,9 Gew.-%: Ölsäure und
- 3,0 Gew.-%: Wasser.

Die Isocyanatmischung war ein Polyisocyanatgemisch mit einem NCO-Gehalt von 28 % und bestand aus
- 50 Gew.-%: eines Semiprepolymers, welches durch Umsetzung von (I) 100 Gew.-Teilen eines Gemisches aus 80 Gew.-Teilen 4,4'-Diisocyanatodiphenylmethan, 10 Gew.-Teilen 2,4'-Diisocyanatodiphenylmethan, 10 Gew.-Teilen tri- und höherfunktionellen Polyisocyanaten der Diphenylmethanreihe mit (II) 12,5 Gew.-Teilen Polypropylenglykol der OH-Zahl 485 erhalten wurde, mit einem NCO-Gehalt von 24,6 % und
- 50 Gew.-%: eines Polyisocyanates, das durch Phosgenierung von Anilin-Formaldehyd-Kondensaten hergestellt wurde und einen NCO-Gehalt von 31,5 % aufweist.

Nach 5 Minuten ist die Verschäumung beendet. Nun wird wieder angehalten und die Reaktionsmischung zur Erzeugung der massiven Polyurethan-Innenschicht (800 g) eingefüllt. Man rotiert sofort nach dem Einfüllen wieder um zwei Achsen gleichzeitig.

Die Reaktionsmischung zur Erzeugung der massiven Polyurethan-Innenschicht bestand aus 100 Gew.-Teilen einer Polyolmischung und 90 Gew.-Teilen einer Isocyanatmischung.

Die Polyolmischung mit einer OH-Zahl von 300 bestand aus
- 29,12 Gew.-%: eines Polyethers der OH-Zahl 35, der durch Addition einer Mischung aus 86,55 % Propylenoxid und 13,45 % Ethylenoxid auf Trimethylolpropan hergestellt wurde,
- 29,12 Gew.-%: eines Polyethers der OH-Zahl 28, der durch Addition einer Mischung aus 80,0 % Propylenoxid und 20,0 % Ethylenoxid auf Trimethylolpropan hergestellt wurde,
- 9,71 Gew.-%: Diethylenglykol,
- 9,71 Gew.-%: Dipropylenglykol,
- 19,42 Gew.-%: Ethylendiamin addiert mit Polypropylenoxid,
- 0,01 Gew.-%: Dibutylzinndilaurat,
- 2,91 Gew.-%: einer 50 Gew.-%igen Kalium-Aluminiumsilikat-Lösung in Rizinusöl.

Die Isocyanatmischung war ein Polyisocyanatgemisch mit einem NCO-Gehalt von 28 % und bestand aus
- 50 Gew.-%: eines Semiprepolymers, welches durch Umsetzung von (I) 100 Gew.-Teilen eines Gemisches aus 80 Gew.-Teilen 4,4'-Diisocyanatodiphenylmethan, 10 Gew.-Teilen 2,4'-Diisocyanatodiphenylmethan, 10 Gew.-Teilen tri- und höherfunktionellen Polyisocyanaten der Diphenylmethanreihe mit (II) 12,5 Gew.-Teilen Polypropylenglykol der OH-Zahl 485 erhalten wurde, mit einem NCO-Gehalt von 24,6 % und
- 50 Gew.-%: eines Polyisocyanates, das durch Phosgenierung von Anilin-Formaldehyd-Kondensaten hergestellt wurde und einen NCO-Gehalt von 31,5 % aufweist.

Nach einer Reaktionszeit von 4 Minuten wurde entformt.

Man erhielt einen Hohlkörper mit einer massiven Polyamidaußenschicht, einer mindestens 8 mm und höchstens 15 mm dicken offenzelligen Schaumschicht und einer massiven Polyurethan-Innenschicht.

## Patentansprüche

1. Tank mit mehrschichtigem Wandaufbau, dadurch gekennzeichnet, daß der Wandaufbau von außen nach innen besteht aus Schichten aus
- massivem, nicht geschäumten Polymeren,
- offenzellig geschäumtem Polyurethan,
- massivem Polyurethan,
- gegebenenfalls massivem Polyamid.

2. Tank nach Anspruch 1, dadurch gekennzeichnet, daß das Polyamid Polyamid 6 oder Polyamid 66 ist.

3. Tank nach Anspruch 1, dadurch gekennzeichnet, daß das Polyolefin Polypropylen oder Polyethylen oder Copolymerisat mit Hauptbestandteil Ethylen oder Propylen in der Monomerzusammensetzung ist.

4. Tank nach Anspruch 1, dadurch gekennzeichnet, daß das offenzellig geschäumte Polyurethan in der Form durch Zusammengeben einer Polyolmischung und einer Isocyanatmischung hergestellt wird, wobei die Polyolmischung aus 86 bis 95 Gew.-% di- oder höherfunktionell OH-terminiertem Polyester bzw. Polyestergemisch oder bevorzugt di- oder höherfunktionell OH-terminiertem Polyether bzw. Polyethergemisch, oder Gemischen daraus, 3 bis 9 Gew.-% Katalysatoren, Kettenverlängerern und Additiven und 2 bis 5 Gew.-% Treibmittel und die Isocyanatmischung aus aromatischen di- oder höherfunktionellen Isocyanaten oder deren Prepolymeren besteht.

5. Verfahren zur Herstellung des Tanks nach Anspruch 1, dadurch gekennzeichnet, daß eine Form um zwei Achsen gleichzeitig rotiert wird und die reaktiven Schmelzen zur Herstellung der Schichten so eingefüllt werden, daß die folgende Schicht jeweils nach dem Ausreagieren der vorhergehenden Schicht aufgebracht wird.

6. Verfahren zur Herstellung des Tanks nach Anspruch 1, dadurch gekennzeichnet, daß ein fertiger Behälter aus Polyamid oder Polyethylen um zwei Achsen gleichzeitig rotiert wird, der beim fertigen Tank als Außenschicht dient, und die reaktiven Schmelzen zur Herstellung der weiteren Schichten so eingefüllt werden, daß die folgende Schicht jeweils nach dem Ausreagieren der vorhergehenden Schicht aufgebracht wird. Nach dem Ausreagieren der letzten Schicht wird der fertige Tank mit mehrschichtigem Wandaufbau entnommen.

7. Verwendung der Tanks nach Anspruch 1 als Vorratsbehälter für Öle, Treibstoffe.
